# EUROPÄISCHE PATENTSCHRIFT

(11) **EP 1 514 622 B1**
(45) Veröffentlichungstag und Bekanntmachung des Hinweises auf die Patenterteilung: **23.08.2006**
(21) Anmeldenummer: 04021633.5
(22) Anmeldetag: 10.09.2004
(51) Int. Cl.: B22F 3/105, B29C 67/00

(54) **Vorrichtung und Verfahren zur Herstellung eines dreidimensionalen Formkörpers**
Device and process for producing a three-dimensional object
Appareil et procédé pour la fabrication d'un article tridimensionnel

(30) Priorität: 15.09.2003 DE 10342882
(43) Veröffentlichungstag der Anmeldung: 16.03.2005
(73) Patentinhaber: TRUMPF Werkzeugmaschinen GmbH + Co. KG, 71254 Ditzingen (DE)
(72) Erfinder: Lindemann, Markus, 70839 Gerlingen (DE); Renz, Bernd Hermann, Dr., 71672 Marbach (DE); Hutfless, Joachim, Dr., 71254 Ditzingen-Schöckingen (DE); Hammann, Gerhard, Dr., 70825 Korntal-Münchingen (DE)
(74) Vertreter: Maser, Jochen

(56) Entgegenhaltungen:
- DE-U- 20 305 843
- US-A- 5 876 550

## Beschreibung

Die Erfindung betrifft eine Vorrichtung und ein Verfahren zur Herstellung eines dreidimensionalen Formkörpers nach dem Oberbegriff des Anspruchs 1 beziehungsweise des Anspruchs 22.

Die vorliegende Erfindung bezieht sich auf generative Fertigungsverfahren, bei denen komplexe, dreidimensionale Bauteile schichtweise aus Werkstoffpulvern aufgebaut werden. Die Anwendungsfelder der Erfindung liegen neben dem Rapid Prototyping und den benachbarten Disziplinen Rapid Tooling und Rapid Manufacturing insbesondere im Bereich der Herstellung von Serienwerkzeugen und -funktionsteilen. Dazu gehören beispielsweise Spritzgusswerkzeuge mit oberflächennahen Kühlkanälen sowie Einzelteile und Kleinserien von komplexen Funktionsbauteilen für die Medizin, den Maschinenbau, Flugzeugbau und Automobilbau.

Zu den für die vorliegende Erfindung relevanten generativen Fertigungsverfahren zählen das Laserschmelzen, das beispielsweise aus der DE 196 49 865 C1 der Fraunhofer-Gesellschaft bekannt ist, und das Lasersintern, das beispielsweise aus der US 4,863,538 der Universität von Texas bekannt ist. Eine Vorrichtung zum Lasersinteren ist aus der DE-U-203 05843 bekannt.

Bei dem aus der DE 196 49 865 C1 bekannten Verfahren des Laserschmelzens werden die Bauteile aus handelsüblichen, einkomponentigen, metallischen Werkstoffpulvern ohne Bindemittel oder sonstige Zusatzkomponenten hergestellt. Dazu wird das Werkstoffpulver jeweils als dünne Schicht auf eine Bauplattform aufgebracht. Diese Pulverschicht wird lokal entsprechend der gewünschten Bauteilgeometrie mit einem Laserstrahl aufgeschmolzen. Die Energie des Laserstrahls wird so gewählt, dass das metallische Werkstoffpulver an der Auftreffstelle des Laserstrahls über seine gesamte Schichtdicke vollständig aufgeschmolzen wird. Gleichzeitig wird eine Schutzgasatmosphäre über der Wechselwirkungszone des Laserstrahls mit dem metallischen Werkstoffpulver aufrechterhalten, um Fehlstellen im Bauteil zu vermeiden, die beispielsweise durch Oxidation hervorgerufen werden können. Zur Durchführung des Verfahrens ist eine Vorrichtung bekannt, welche aus der Figur 1 der DE 196 49 865 C1 hervorgeht.

Bei dem aus der US 4,863,538 bekannten Verfahren des Lasersinterns werden die Bauteile aus speziell für das Lasersintern entwickelten Werkstoffpulvern hergestellt, die neben dem Grundwerkstoff eine oder mehrere Zusatzkomponenten enthalten. Die verschiedenen Pulverkomponenten unterscheiden sich insbesondere hinsichtlich des Schmelzpunktes. Beim Lasersintern wird das Werkstoffpulver als dünne Schicht auf eine Bauplattform aufgebracht. Diese Pulverschicht wird lokal entsprechend der Geometriedaten des Bauteils mit einem Laserstrahl bestrahlt. Die niedrig-schmelzenden Komponenten des Werkstoffpulvers werden durch die eingestrahlte Laserenergie aufgeschmolzen, andere bleiben im festen Zustand. Die Befestigung der Schicht an der vorherigen Schicht erfolgt über die aufgeschmolzenen Pulverkomponenten, die beim Erstarren eine Verbindung herstellen. Nach dem Aufbau einer Schicht wird die Bauplattform um eine Schichtdicke abgesenkt und aus einem Vorratsbehälter wird eine neue Pulverschicht aufgebracht.

Die Firma EOS GmbH Electro Optical Systems bietet Lasersinteranlagen für die Verarbeitung von Kunststoffen EOSINT P 700 und die Verarbeitung von Sand EOSINT S 750 an, die eine Prozesskammer und zwei Laser und zwei Scaneinheiten aufweisen. Ziel dieser Anlagen ist der schnelle Aufbau großvolumiger Bauteile.

Zur Herstellung relativ großvolumiger Bauteile wird gemäß der WO 02/36 331 der Concept Laser GmbH eine Vorrichtung zum Sintern, Abtragen und/oder Beschriften mittels elektromagnetischer, gebündelter Strahlung vorgeschlagen, bei der ein Scanner an einem über der Bauplattform nach Art eines Kreuzschlittens motorisch verfahrbaren Scannerträgers angeordnet ist.

Diese Vorrichtung weist eine Laserbearbeitungsmaschine mit austauschbaren Technologiemodulen zum Sintern, Abtragen und/oder Beschriften auf. In einem Maschinengehäuse sind mehrere Bauräume vorgesehen. Der Scannerträger pendelt zwischen den Bauräumen hin und her, so dass in beliebiger Reihenfolge mehrere Bauräume abgefahren werden können. Beispielsweise wird vorgeschlagen, vier Bauräume in einer einem Quadrat angenäherten Anordnung vorzusehen, um parallel vier Bauteile gleichzeitig in einer Maschine aufzubauen oder auf sonstige Weise zu bearbeiten. Hierzu ist erforderlich, dass der Scannerträger zwischen den Bauräumen hin und her pendelt, um diese gleichzeitige Herstellung von mehreren Bauteilen in den Bauräumen einer Maschine zu ermöglichen.

Diese Anordnung weist den Nachteil auf, dass die Zugänglichkeit zu den einzelnen Bauräumen in einem Maschinengehäuse durch den nach Art eines Kreuzschlittens motorisch verfahrbaren Scannerträger erschwert ist, der sich quer über die Bauräume erstreckt. Darüber hinaus ist aufgrund der parallelen Arbeitsweise in den einzelnen Bauräumen die Entnahme eines fertigen Bauteils und die Umrüstung für ein neues Bauteil erst möglich, wenn die in den weiteren Bauräumen parallel dazu aufzubauenden Formkörper ebenfalls fertiggestellt sind. Dadurch sinkt die Wirtschaftlichkeit dieser Vorrichtung, da das Bauteil mit der längsten Aufbauzeit die Entnahme und Umrüstung bestimmt. Darüber hinaus können die während des Herstellungsprozesses entstehenden Einflüsse, wie beispielsweise Temperatur, Funkenflug beim Aufbau eines Formkörpers, die weiteren parallel dazu verlaufenden Arbeitsprozesse, wie beispielsweise das Beschichten, das Abkühlen usw., nachteilig beeinflussen.

Der Erfindung liegt deshalb die Aufgabe zugrunde, eine Vorrichtung und ein Verfahren zur Herstellung eines dreidimensionalen Formkörpers bereitzustellen, bei der beziehungsweise bei dem die Herstellungszeit verkürzt und die Flexibilität in der Herstellung und die Qualität der Formkörper erhöht wird.

Diese Aufgabe wird gelöst durch eine Vorrichtung nach dem Patentanspruch 1 beziehungsweise durch ein Verfahren nach dem Patentanspruch 22. Zweckmäßige Weiterbildungen und Ausgestaltungen der Erfindung sind in den abhängigen Ansprüchen beschrieben.

Durch die erfindungsgemäße Vorrichtung wird die Wirtschaftlichkeit zur Herstellung von Formkörpern wesentlich erhöht. Es wird in einer ersten Prozesskammer ein Formkörper vollständig hergestellt, während in zumindest einer weiteren Prozesskammer ein Abkühlen und ein Entladen des zuvor hergestellten Formkörpers erfolgt oder ein Umrüsten oder Einrichten der Prozesskammer auf einen nachfolgend herzustellenden Formkörper durchgeführt wird. Dadurch wird eine hohe Auslastung der Strahlquelle erreicht, da diese unmittelbar nach dem Herstellen eines Formkörpers in die nächste Prozesskammer überführt wird, um in der zumindest einen weiteren Prozesskammer den nächsten Formkörper herzustellen.

Die Ausgestaltung von wenigstens zwei hermetisch abgeriegelten Prozesskammern ermöglicht des Weiteren, dass in einer ersten Prozesskammer ein Formkörper mit einem bestimmten Werkstoff aufgebaut werden kann, wohingegen in zumindest einer weiteren Prozesskammer ein Formkörper mit einem gleichen oder von dem ersten Formkörper verschiedenen Werkstoffpulver aufgebaut werden kann. Insbesondere beim Einsatz in der Medizintechnik ist diese Anordnung von besonderer Bedeutung, da eine hohe Reinheit der verwendeten Werkstoffpulver erforderlich ist.

Die erfindungsgemäße Vorrichtung weist darüber hinaus den Vorteil auf, dass bedienerlose Schichten realisierbar sind, da ohne Bedienereingriff eine der Anzahl der Prozesskammern entsprechende Anzahl von Formkörpern unmittelbar nacheinander produziert werden können.

Durch die Positionierung der zumindest einen Strahlablenkeinrichtung unmittelbar zu einer Prozesskammer ist des Weiteren eine gute Zugänglichkeit zu der zweiten oder den weiteren Prozesskammern gegeben, um die hergestellten Formkörper zu entnehmen und ein gegebenenfalls erforderliches Umrüsten oder Einrichten der Prozesskammer auf einen nachfolgenden Arbeitsprozess zu ermöglichen.

Die hermetisch abgeriegelte Ausgestaltung der Prozesskammer weist auch den Vorteil auf, dass der Herstellungsprozess eines Formkörpers ohne Beeinflussung durch unmittelbar benachbarte Umrüsttätigkeiten, Abkühlprozesse, Verunreinigungen aus der Umgebung oder dergleichen ermöglicht ist.

Nach einer vorteilhaften Ausgestaltung der Erfindung ist vorgesehen, dass jede Prozesskammer eine Absaugung für nicht verfestigtes Aufbaumaterial aufweist, welche zumindest eine Sperreinrichtung umfasst. Durch diese Sperreinrichtung wird verhindert, dass Aufbaumaterial aus einer Prozesskammer abgesaugt wird, die sich im schichtweisen Aufbau eines Formkörpers befindet, wenn in einer weiteren Prozesskammer eine Absaugung des nicht verfestigten Aufbaumaterials durchgeführt wird. Die Arbeitsprozesse in einer Prozesskammer können ungestört und unabhängig von den Arbeitsprozessen der benachbarten Prozesskammern ablaufen.

Die Anordnung der Sperreinrichtungen zur Prozesskammer in einer Schließstellung weist des Weiteren den Vorteil auf, dass eine Schutzgasatmosphäre während des Arbeitsprozesses zur Verfestigung der einzelnen Pulverschichten aufrechterhalten ist. Dadurch wird die Prozesssicherheit erhöht und gleichzeitig der Verbrauch an Schutzgas gering gehalten.

Nach einer weiteren vorteilhaften Ausgestaltung der Erfindung ist vorgesehen, dass ein Gebläse für die wenigstens zwei Prozesskammern vorgesehen ist und wenigstens eine Sperreinrichtung zwischen Gebläse und jeder Prozesskammer in der Absaugung der Prozesskammer vorgesehen ist. Zur Reduzierung des Bauraumes und der Kosten ist beispielsweise ein Gebläse vorgesehen, welches zum Betrieb für zumindest zwei Prozesskammern ausgebildet ist. Dadurch kann auch eine Vereinfachung im Aufbau erzielt werden. Um die Prozesskammern hermetisch abzuriegeln und unabhängig voneinander zu betreiben, ist zwischen dem Gebläse und jeder Prozesskammer in der Absaugung zumindest eine Sperreinrichtung angeordnet, so dass beim Betrieb des Gebläses eine Absaugung an derjenigen Prozesskammer durchgeführt wird, bei der der Formkörper vollständig hergestellt wurde und eine Absaugung für die anderen, weiteren Prozesskammern unterbunden ist. Dadurch kann eine gegenseitige Beeinflussung der Prozesskammern bei der Benutzung von gemeinsamen Bauteilkomponenten ausgeschlossen werden.

Die Prozesskammern weisen Einlassöffnungen auf, welche vorteilhafterweise jeweils durch eine Sperreinrichtung verschließbar sind. Die Sperreinrichtungen sind somit unmittelbar der Prozesskammer zugeordnet, so dass weitere störende Einflussfaktoren ausgeräumt sind. Die Sperreinrichtungen der Einlassöffnungen können zusammen mit den Sperreinrichtungen der Auslassöffnungen betätigbar sein.

Die Sperreinrichtungen sind nach einer bevorzugten Ausführungsform zumindest in einer mit einer Aufbaukammer und mit einer Pulverfalle in Verbindung stehenden Auslassöffnung vorgesehen. Dadurch ist die hermetische Abriegelung der Prozesskammer gegeben. Zusätzlich kann vorgesehen sein, dass eine Zuführöffnung, welche einen Volumenstrom während der Absaugung der Prozesskammer zuführt, ebenfalls mit einer Sperreinrichtung verschließbar ist. Vorzugsweise ist vorgesehen, dass in einer Auslassöffnung einer Handabsaugeinrichtung eine Sperreinrichtung vorgesehen ist. Diese Handabsaugeinrichtung dient zur manuellen Absaugung von Pulverresten. Somit kann die hermetische Abriegelung sowie der Einsatz des Gebläses optimiert sein.

Jede Sperreinrichtung ist bevorzugt durch eine Steuer- und Recheneinheit getrennt oder als Gruppe für jede Prozesskammer gemeinsam ansteuerbar. Dadurch kann ein autarker Betrieb der Prozesskammern sowie eine Prozessüberwachung ermöglicht sein.

Die Sperreinrichtungen sind nach einer vorteilhaften Ausführungsform der Erfindung als Quetschventile ausgebildet und vorzugsweise pneumatisch betätigbar. Diese Quetschventile weisen den Vorteil auf, dass diese nahezu verschleißfrei sind und kurze Reaktionszeiten besitzen. Alternativ zur pneumatischen Ansteuerung kann auch eine hydraulische, elektrische oder elektromagnetische Ansteuerung gegeben sein.

Zur autarken Ausgestaltung jeder Prozesskammer ist des Weiteren vorteilhafterweise vorgesehen, dass die Absaugung für nicht verfestigtes Aufbaumaterial eine Abscheidevorrichtung und ein Filter umfasst. Dadurch kann eine Rückführung des nicht aufgeschmolzenen und verfestigten Aufbaumaterials ohne Verunreinigungen, z.B. mit einem weiteren Werkstoff aus einer benachbarten Prozesskammer, erfolgen, wodurch eine Reduzierung des Werkstoffeinsatzes erzielt sowie gleichzeitig die Reinheit der verarbeiteten Werkstoffe aufgrund eines geschlossenen Kreislaufes sichergestellt werden kann. Vorteilhafterweise ist vorgesehen, dass eine Nachbearbeitung des aus der Prozesskammer abgeführten Pulvers durch Sieben oder dergleichen vorgesehen ist. Diese Nachbearbeitung oder Wiederaufbereitung kann durch eine in der Vorrichtung vorgesehene Einrichtung vorgesehen sein oder extern erfolgen, wobei bei der externen Ausbildung bevorzugt eine Schnittstelle zu der Abscheidevorrichtung ausgebildet ist, zu welcher ein Auffangbehälter austauschbar zur externen Reinigung und Aufbereitung oder Nachbereitung des Pulvers vorgesehen ist.

Nach einer weiteren vorteilhaften Ausgestaltung der Erfindung ist vorgesehen, dass zur Absaugung von nicht verfestigtem Aufbaumaterial sowie zur Kühlung der Prozesskammer und vorzugsweise der Bauplattform ein Sauggebläse für wenigstens zwei Prozesskammern vorgesehen ist, welches jeweils einer zur Prozesskammer zugehörigen Abscheidevorrichtung nachgeschaltet ist. Dadurch kann bei gemeinsamer Nutzung eines Gebläses eine getrennte Abscheidung des nicht verfestigten Aufbaumaterials ermöglicht sein, um die Trennung der in der jeweiligen Prozesskammer verwendeten Aufbaumaterialien aufrecht zu erhalten. Bevorzugt ist die Sperreinrichtung vor dem Filter und der Abscheidevorrichtung nahe der Prozesskammer angeordnet. Jede hermetisch abgeschlossene Prozesskammer ist durch eine zur Strahlablenkvorrichtung weisende, verschließbare Öffnung zugänglich. Dadurch kann eine gute Zugänglichkeit zur Prozesskammer erzielt werden, sofern die Strahlablenkeinrichtung an der weiteren Prozesskammer positioniert ist.

Vorteilhafterweise ist vorgesehen, dass die verschließbare Öffnung einen für die elektromagnetische Strahlung im wesentlichen durchlässigen Bereich umfasst, der zumindest größer als eine Bauplattform ist, die auf einem Hubtisch zur Aufnahme von wenigstens einem Formkörper vorgesehen ist. Dadurch wird ein hinreichender Einkoppelraum für die elektromagnetische Strahlung geschaffen. Gleichzeitig kann das Bedienpersonal eine visuelle Überprüfung und Überwachung der Prozesskammer durchführen. Der in der verschließbaren Öffnung vorgesehene transparente Bereich ist vorteilhafterweise aus einem Glas ausgebildet, welches bevorzugt zwei entspiegelte Oberflächen umfasst. Dadurch kann eine optimale Strahleinführung und ein optimales Auftreffverhalten der Strahlung auf die aufzubauende Schicht gegeben sein.

Zur hermetischen Abriegelung der Prozesskammer ist vorteilhafterweise vorgesehen, dass eine Zuführeinrichtung zum Zuführen des Aufbaumaterials zumindest nach dem Zuführen des Aufbaumaterials in die Prozesskammer in einer die Prozesskammer schließenden Position vorgesehen ist. Durch diese Ausgestaltung kann verhindert werden, dass während des Aufschmelzens des Aufbaumaterials durch eindringende Luft Oxidationen auftreten oder durch eindringendes Aufbaumaterial nicht definierte Querschnitte aufgebaut werden. Gleichzeitig kann dadurch während des Absaugprozesses von nicht verfestigtem Aufbaumaterial nach der Herstellung des Formkörpers verhindert werden, dass zum Aufbau bereitgestelltes Pulver durch eine Sogwirkung in die Prozesskammer gefördert wird.

Zur Abdichtung zwischen der Prozesskammer und einem durch die Öffnung verschließbaren Deckel ist eine Dichtung vorgesehen. Dadurch wird in einfacher Weise eine Abdichtung zur hermetischen Abriegelung gebildet. Während des Aufbaus der Schichten wird Schutz- oder Inertgas der Prozesskammer zu- und abgeführt. Durch einen geschlossenen Kreislauf aufgrund der abgeschlossenen Prozesskammer und einer Leitungsführung ist eine Reduzierung der Betriebskosten gegeben.

Zur hermetischen Abriegelung der Prozesskammer ist des Weiteren vorteilhafterweise vorgesehen, dass zwischen dem Träger zur Aufnahme eines Formkörpers und einer den Träger umgebenden Aufbaukammer zumindest eine Dichtung oder eine abdichtende Ausgestaltung der Teile vorgesehen ist. Die Prozesskammer ist beim Aufschmelzen mit Schutzoder Inertgas gefüllt und wird mit Überdruck betrieben, um den Eintritt von Sauerstoff in die Prozesskammer zu verhindern.

Zur hermetischen Abriegelung der Prozesskammer ist vorteilhafterweise vorgesehen, dass an einem Hubtisch, welcher Teil eines Trägers ist, eine umlaufende Nut mit einem Dichtring angeordnet ist. Dieser Dichtring ist vorzugsweise im Durchmesser geringfügig variabel ausgebildet, so dass aufgrund der unterschiedlichen Erwärmungen während des Herstellens des Formkörpers eine dicht anliegende Ausgestaltung gegeben ist.

Bevorzugt ist der Dichtring aus einem Werkstoff ausgebildet, welcher im Vergleich zur Umfangswand der Aufbaukammer einen höheren Verschleiß aufweist. Dadurch ist nach 'mehrmaligem Gebrauch ein einfaches Austauschen des Dichtringes ausreichend, um eine dichte Anordnung in der Aufbaukammer zu erzielen.

Die Umfangswand der Aufbaukammer weist bevorzugt eine Oberflächenhärte auf, welche höher als die des Aufbaumaterials ist. Dadurch kann eine wartungsarme Aufbaukammer ausgebildet sein. Vorteilhafterweise ist die Aufbaukammer oberflächenbeschichtet, vorzugsweise verchromt.

Vorteilhafterweise ist des Weiteren vorgesehen, dass an eine Stirnfläche der Bauplattform angrenzend oder dieser zugeordnet ein Dichtring oder Abstreifer vorgesehen ist, um eine erste Abdichtung zu bilden. Dieser Abstreifer, der vorteilhafterweise als Filzring ausgebildet ist, weist den Vorteil auf, dass ein größeres Temperaturspiel zwischen der Umfangswand der Aufbaukammer und der Bauplattform ausgeglichen werden kann: Die Bauplattform wird zur Erhöhung der Qualität des Formkörpers aufgeheizt, so dass zwischen der Bauplattform und der Umfangswand der Aufbaukammer Temperaturdifferenzen entstehen, die zu einer unterschiedlichen Ausdehnung der Bauplattform und der Aufbaukammer führen, welche durch den Abstreifer ausgeglichen werden.

Des Weiteren kann vorteilhafterweise zur hermetischen Abriegelung der Prozesskammer eine Wellendichtung vorgesehen sein, welche an einer Hubstange des Hubtisches vorgesehen ist. Nach einer weiteren vorteilhaften Ausgestaltung der Erfindung ist vorgesehen, dass eine Stahlablenkeinrichtung vorgesehen ist, welche zu den einzelnen Prozesskammern positionierbar ist. Die Herstellungskosten für die erfindungsgemäße Vorrichtung können dadurch reduziert werden, dass auf eine gemeinsame Strahlquelle und eine gemeinsame Strahlablenkeinrichtung unabhängig von der Anzahl der Prozesskammern zurückgegriffen wird.

Zur einfachen und lagerichtigen Positionierung der Strahlablenkeinrichtung ist vorteilhafterweise eine Linearführung vorgesehen, entlang welcher die Strahlablenkeinrichtung verfahrbar und vorzugsweise präzise zur Prozesskammer positionierbar ist. Die Linearführung ist vorteilhafterweise in geringer Höhe oberhalb der jeweiligen Prozesskammer angeordnet, so dass ein geringer Abstand zwischen der Ablenkvorrichtung und der aufzubauenden Schicht zur Herstellung eines Formkörpers gegeben ist, um insbesondere eine geringe Breite der Schmelzspur zu erzielen.

Nach einer alternativen Ausgestaltung der Erfindung ist vorgesehen, dass die wenigstens zwei Prozesskammern zur Strahlablenkeinrichtung verfahrbar sind. Beispielsweise kann eine Art Karussell oder eine Aneinanderreihung von mehreren Prozesskammern vorgesehen sein, welche zu einer stationär angeordneten Strahlablenkeinrichtung verfahrbar sind. Insbesondere bei einer karussellförmigen Anordnung kann eine sehr hohe Auslastung der Strahlquelle und eine über längere Zeit unbeaufsichtigte Herstellung von Formkörpern ermöglicht sein.

Nach einer bevorzugten Ausführungsform der Erfindung ist vorgesehen, dass in einem Maschinengehäuse mindestens zwei hermetisch abgeriegelte und getrennte Prozesskammern sowie eine Strahlquelle und eine an mindestens zwei Prozesskammern positionierbare Strahlablenkeinrichtung zur Bildung eines Mehrkammersystems vorgesehen sind. Diese Vorrichtung weist den Vorteil auf, dass diejenigen Komponenten mehrfach vorhanden sind, die den autarken Betrieb jeweils einer Prozesskammer gewährleisten und diejenigen Komponenten einfach vorgesehen sind, die für die Gesamtfunktion der Anlage notwendig sind. Somit kann eine Vorrichtung geschaffen werden, welche eine hohe Auslastung der Strahlquelle ermöglicht und gleichzeitig in der Herstellung kostenoptimiert ist.

Insbesondere durch die erfindungsgemäße Vorrichtung ist ermöglicht, ein Verfahren zur Herstellung eines dreidimensionalen Formkörpers durchzuführen, bei dem in einer ersten Prozesskammer die vollständige Herstellung eines Formkörpers erfolgt, wobei parallel in wenigstens einer zweiten Prozesskammer ein Abkühlen und Entladen eines fertigen Formkörpers, eine Umrüstung oder eine Einrichtung der Prozesskammer für die Herstellung eines weiteren Formkörpers ermöglicht wird. Dadurch kann eine rationelle Herstellung von Formkörpern gegeben sein. Des Weiteren ist die Verarbeitung verschiedener Werkstoffe ermöglicht. Aufgrund der hermetisch abgeriegelten Prozesskammern können unterschiedliche Prozessparameter gefahren werden, um besonderen Ansprüchen an den Aufbau, die Oberflächenqualität sowie an einen spannungsarmen, rissfreien Aufbau der Formkörper gerecht zu werden.

Jede Prozesskammer weist gemäß einer bevorzugten Ausführungsform zumindest eine in die Prozesskammer führende Einlassöffnung und zumindest eine davon abführende Auslassöffnung für Schutz- oder Inertgas auf. Dadurch kann in Abhängigkeit des verwendeten Werkstoffes zum Aufbau des Formkörpers ein entsprechendes Schutzgas oder Inertgas zugeführt werden. Dadurch sind die jeweiligen Prozesskammern völlig unabhängig voneinander ausgestaltet und auf spezifische Anforderungen zur Herstellung eines Formkörpers einstellbar.

Nach einer vorteilhaften Ausführungsform des Verfahrens ist vorgesehen, dass während des Absaugens von nicht verfestigtem Aufbaumaterial oder des Kühlens eines hergestellten Formkörpers in einer Prozesskammer Sperreinrichtungen der zumindest einen weiteren Prozesskammer in einer geschlossenen Position gehalten werden. Die Prozesskammern sind dadurch zueinander hermetisch abgeriegelt und die in den jeweiligen Prozesskammern stattfindenden und vorangehenden Arbeitsschritte führen nicht zu einer gegenseitigen Beeinflussung. Dadurch kann die Auslastung der Vorrichtung erhöht und die Qualität des Formkörpers verbessert werden.

In den weiteren abhängigen Verfahrensansprüchen sind weitere vorteilhafte Ausführungsformen angegeben.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht einer erfindungsgemäßen Vorrichtung,
- Figur 2: eine schematische Schnittdarstellung einer Prozesskammer in einer Bearbeitungsposition beim Herstellen eines Formkörpers,
- Figur 3: eine schematische Schnittdarstellung der Prozesskammer nach Figur 2 nach dem schichtweisen Aufbau eines Formkörpers in einer Kühlposition,
- Figur 4: eine schematische Schnittdarstellung der Prozesskammer nach Figur 2 nach dem schichtweisen Aufbau eines Formkörpers in einer Absaugposition,
- Figur 5: einen schematischen Teilschnitt einer Prozesskammer mit einer Zuführeinrichtung und
- Figur 6: eine schematische Darstellung von zwei Prozesskammern und eine Verbindung der dazugehörigen Komponenten.

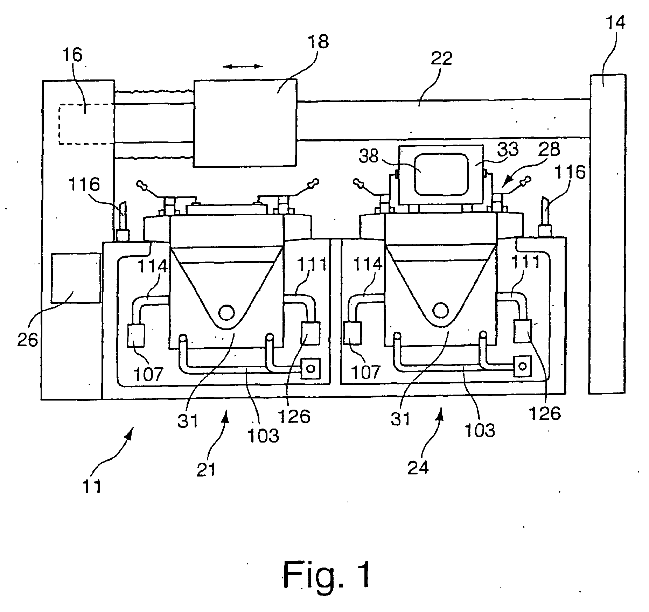

In Figur 1 ist schematisch eine erfindungsgemäße Vorrichtung 11 zur Herstellung eines dreidimensionalen Formkörpers durch aufeinanderfolgendes Verfestigen von Schichten eines pulverförmigen Aufbaumaterials dargestellt. Die Herstellung eines Formkörpers durch Laserschmelzen ist beispielsweise in der DE 196 49 865 C1 beschrieben. Die Vorrichtung 11 umfasst eine in einem Maschinengestell 14 angeordnete Strahlquelle 16 in Form eines Lasers, beispielsweise eines Festkörperlasers, welcher einen gerichteten Strahl abgibt. Dieser Strahl wird über eine Strahlablenkvorrichtung 18, beispielsweise in Form eines oder mehrerer ansteuerbarer Spiegel, als abgelenkter Strahl auf eine Arbeitsebene in einer Prozesskammer 21 fokussiert. Die Strahlablenkeinrichtung 18 ist entlang einer Linearführung 22 zwischen einer ersten Prozesskammer 21 und einer weiteren Prozesskammer 24 motorisch verfahrbar angeordnet. Über Stellantriebe kann eine exakte Position der Strahlablenkeinrichtung 18 zu den Prozesskammern 21, 24 angefahren werden. In dem Maschinengestell 14 ist des Weiteren eine Steuer- und Recheneinheit 26 zum Betrieb der Vorrichtung 11 und zur Einstellung einzelner Parameter für die Arbeitsprozesse zur Herstellung der Formkörper vorgesehen.

Die erste Prozesskammer 21 und zumindest eine weitere Prozesskammer 24 sind getrennt zueinander angeordnet und hermetisch getrennt voneinander vorgesehen.

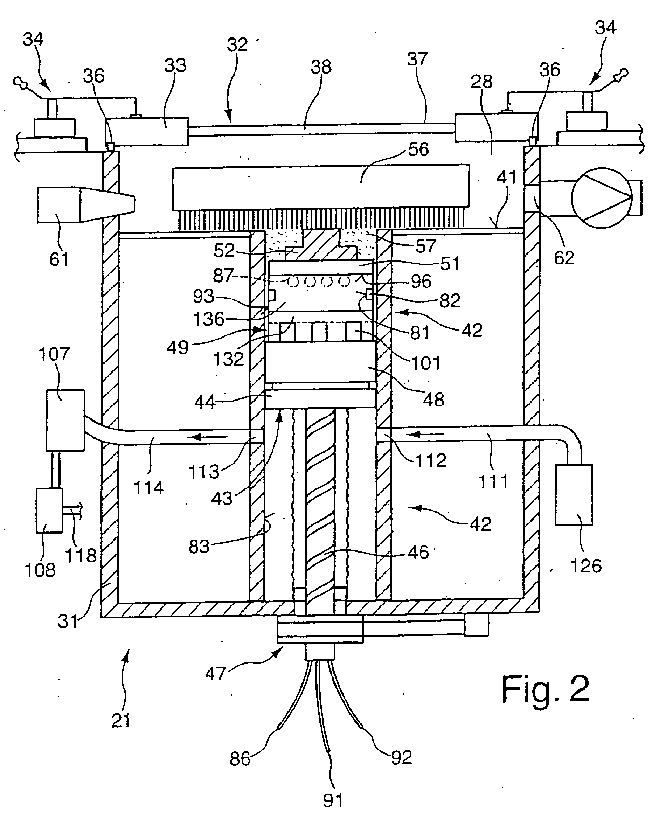

In Figur 2 ist die Prozesskammer 21 beispielhaft im Vollquerschnitt dargestellt. Die Prozesskammer 21 umfasst ein Gehäuse 31 und ist durch eine Öffnung 32 zugänglich, welche durch wenigstens ein Verschlusselement 33 verschließbar ist. Das Verschlusselement 33 ist bevorzugt als schwenkbarer Deckel ausgebildet, der durch Verriegelungselemente 34, wie beispielsweise Kniehebelelemente, in einer geschlossenen Position fixierbar ist. Zur Abdichtung der Prozesskammer 21 ist an dem Gehäuse 31 nahe der Öffnung 32 eine Dichtung 36 vorgesehen, die vorzugsweise als Elastomerdichtung ausgebildet ist. Das Verschlusselement 33 weist einen Bereich 37 auf, der für die elektromagnetische Strahlung des Laserstrahls durchlässig ist. Bevorzugt ist ein Fenster 38 aus Glas oder Quarzglas eingesetzt, welches Antireflexbeschichtungen an der Oberund Unterseite aufweist. Das Verschlusselement 33 kann vorzugsweise wassergekühlt ausgebildet werden.

Die Prozesskammer 21 umfasst eine Bodenfläche 41. In diese Bodenfläche 41 mündet von unten eine Aufbaukammer 42, in welcher ein Träger 43 auf- und abbewegbar vorgesehen und geführt ist. Der Träger 43 umfasst zumindest eine Bodenplatte 44, die über eine Hubstange oder Hubspindel 46 auf- und abbewegbar angetrieben ist. Hierzu-ist ein Antrieb 47, beispielsweise ein Zahnriemenantrieb, vorgesehen, welcher die feststehende Hubspindel 46 auf- und abbewegt. Die Bodenplatte 44 des Trägers 43 wird vorzugsweise zumindest während des schichtweisen Aufbaus durch ein fluides Medium gekühlt, welches vorzugsweise Kühlkanäle in der Bodenplatte 44 durchströmt. Zwischen der Bodenplatte 44 und der Bauplattform 49 des Trägers 43 ist eine Isolierschicht 48 aus einem mechanisch stabilen, thermisch isolierenden Material angeordnet. Dadurch kann eine Erwärmung der Hubspindel 46 durch die Heizung der Bauplattform 49 und eine damit einhergehende Beeinflussung der Positionierung des Trägers 43 verhindert werden.

Entlang der Bodenfläche 41 der Prozesskammer 21 verfährt eine Auftrag- und Nivelliereinrichtung 56, welche ein Aufbaumaterial 57 in die Aufbaukammer 42 aufbringt. Durch selektives Aufschmelzen des Aufbaumaterials 57 wird eine Schicht auf den Formkörper 52 aufgebaut.

Das Aufbaumaterial 57 besteht bevorzugt aus Metall- oder Keramikpulver. Auch andere für das Laserschmelzen und Lasersintern geeignete und verwendete Werkstoffe werden eingesetzt. In Abhängigkeit des herzustellenden Formkörpers 52 werden die einzelnen Werkstoffpulver ausgewählt.

Die Prozesskammer 21 weist an einer Seite eine Einströmdüse 61 zur Zuführung von Schutzgas oder Inertgas auf. An einer gegenüberliegenden Seite ist eine Absaugdüse oder Absaugöffnung 62 vorgesehen, um das zugeführte Schutz- oder Inertgas abzuführen. Während der Herstellung des Formkörpers 52 wird eine laminare Strömung an Schutz- oder Inertgas erzeugt, um beim Aufschmelzen des Aufbaumaterials 57 eine Oxidation zu vermeiden und das Fenster 38 im Verschlusselement 33 zu schützen. Vorzugsweise wird die hermetisch abgeriegelte Prozesskammer 21 während des Aufbauprozesses unter einem Überdruck von beispielsweise 20 hPa gehalten, wobei auch deutlich höhere Drücke denkbar sind. Dadurch kann während des Aufbauprozesses kein Luftsauerstoff von außen in die Prozesskammer 21 eindringen. Bei der Umwälzung des Schutz- oder Inertgases kann gleichzeitig eine Kühlung erfolgen. Außerhalb der Prozesskammer 21 ist vorzugsweise eine Kühlung und Filtrierung des Schutz- oder Inertgases von aufgenommenen Partikeln des Aufbaumaterials 57 vorgesehen.

Die Aufbaukammer 42 ist bevorzugt zylindrisch ausgebildet. Weitere Geometrien können ebenfalls vorgesehen sein. Der Träger 43 oder zumindest Teile des Trägers 43 sind an die Geometrie der Aufbaukammer 42 angepasst. In der Aufbaukammer 42 wird der Träger 43 zum schichtweisen Aufbau gegenüber der Bodenfläche 41 nach unten bewegt. Die Höhe der Aufbaukammer 42 ist an die Aufbauhöhe beziehungsweise die maximal aufzubauende Höhe eines Formkörpers 52 angepasst.

Eine Umfangswand 83 der Aufbaukammer 42 schließt unmittelbar an die Bodenfläche 41 an und erstreckt sich nach unten, wobei diese Umfangswand 83 an der Bodenfläche 41 aufgehängt ist. In der Umfangswand 83 ist zumindest eine Einlassöffnung 112 vorgesehen. Diese Einlassöffnung 112 steht mit einer Zuführleitung 111 in Verbindung, welche ein Filter 126 außerhalb des Gehäuses 31 aufnimmt. Umgebungsluft wird über das Filter 126 und die Versorgungsleitung 111 durch die Einlassöffnung 112 der Aufbaukammer 42 zugeführt. Die Aufbaukammer 42 weist des Weiteren zumindest eine Auslassöffnung 113 in der Umfangswand 83 auf, an welche sich eine Abführleitung 114 anschließt, die aus dem Gehäuse 31 herausführt und in eine Abscheidevorrichtung 107 mündet. Dieser nachgeschaltet ist ein Filter 108, welches über eine Verbindungsleitung 118 den aus der Aufbaukammer 42 abgeführten Volumenstrom abführt. Vorteilhafterweise ist vorgesehen, dass die Einlassöffnung 112 und die Auslassöffnung 113 miteinander fluchten. Ebenso können die Öffnungen 112, 113 zueinander versetzt angeordnet sein, sowohl in Bezug auf die Höhe als auch deren Zuführposition in radialer Richtung beziehungsweise rechtwinklig zur Längsachse der Aufbaukammer 42.

Die Bauplattform 49 setzt sich aus einer Heizplatte 136 und einer Kühlplatte 132 zusammen. In der Heizplatte 136 sind strichliniert Heizelemente 87 dargestellt. Des weiteren umfasst die Heizplatte 136 einen nicht näher dargestellten Temperaturfühler. Die Heizelemente 87 und der Temperaturfühler stehen mit Versorgungsleitungen 91, 92 in Verbindung, die wiederum durch die Hubspindel 46 zur Bauplattform 49 geführt sind. Am Außenumfang 93 der Bauplattform 49 ist eine umlaufende Nut 81 vorgesehen, in welcher ein oder mehrere Dichtringe 82 eingesetzt sind, dessen oder deren Durchmesser geringfügig veränderbar und an die Einbausituation und Temperaturschwankungen anpassbar ist. Der oder die Dichtringe 82 liegen an einer Umfangswand 83 der Aufbaukammer 42 an. Dieser Dichtring 82 weist eine Oberflächenhärte auf, welche geringer ist als die der Umfangswand 83. Die Umfangswand 83 weist vorteilhafterweise eine Oberflächenhärte auf, welche größer als die Härte des Aufbaumaterials 57 ist, welches für den Formkörper 52 vorgesehen ist. Dadurch kann sichergestellt werden, dass eine Beschädigung der Umfangswand 83 bei längerem Gebrauch verhindert wird und lediglich der Dichtring 82 als Verschleißteil entsprechend den Wartungsintervallen ausgetauscht werden muss. Vorteilhafterweise ist die Umfangswand 83 der Aufbaukammer 42 oberflächenbeschichtet, beispielsweise verchromt.

Die Bodenplatte 44 umfasst eine Wasserkühlung, welche zumindest während des Aufbaus des Formkörpers 52 in Betrieb ist. Über eine Kühlleitung 86, welche durch die Hubspindel 46 der Bodenplatte 44 zugeführt ist, wird Kühlflüssigkeit den in der Bodenplatte 44 vorgesehenen Kühlkanälen zugeführt. Als Kühlmedium ist vorzugsweise Wasser vorgesehen. Durch die Kühlung kann die Bodenplatte 44 beispielsweise auf eine im wesentlichen konstante Temperatur von 20 °C bis 40 °C eingestellt werden.

Der Träger 43 weist zur Aufnahme eines Formkörpers 52 eine Substratplatte 51 auf, welche auf den Träger 43 fest oder lösbar durch eine Arretierung und/oder eine Ausrichthilfe positioniert ist. Die Heizplatte 136 wird vor Beginn der Herstellung eines Formkörpers 52 auf eine Betriebstemperatur zwischen 300 °C und 500 °C aufgeheizt, um einen spannungsarmen, rissfreien Aufbau des Formkörpers 52 zu ermöglichen. Der nicht näher dargestellte Temperaturfühler erfasst die Aufheiztemperatur oder Betriebstemperatur während des Aufbaus des Formkörpers 52.

Die Bauplattform 49 weist Kühlkanäle 101 auf, welche sich bevorzugt quer durch die gesamte Bauplattform 49 erstrecken. Es können ein oder mehrere Kühlkanäle 101 vorgesehen sein. Die Position der Kühlkanäle 101 ist beispielsweise an die Isolierschicht 48 angrenzend gemäß dem Ausführungsbeispiel dargestellt. Alternativ kann vorgesehen sein, dass die Kühlkanäle 101 sich nicht nur unterhalb von Heizelementen 87, sondern auch oberhalb und/oder zwischen den Heizelementen 87 erstrecken.

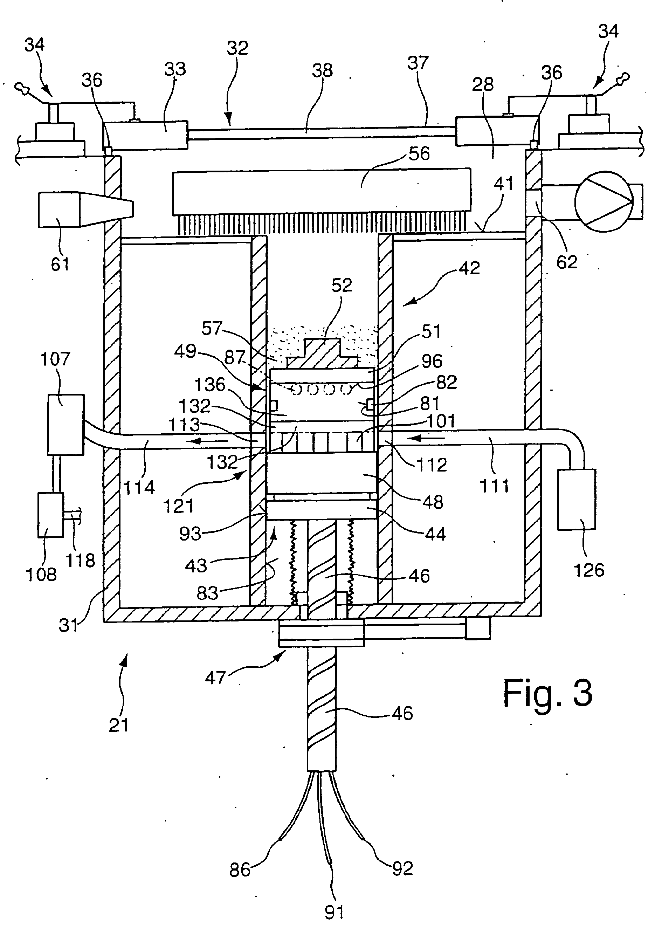

Nach dem Fertigstellen des Formkörpers 52 wird der Träger 43 aus der in Figur 2 dargestellten Position in eine erste Position oder Kühlposition 121 abgesenkt. Diese Position ist in Figur 3 dargestellt. Bereits während des Absenkens des Trägers 43 kann ein Volumenstrom aus der Umgebung über das Filter 126 und die Versorgungsleitung 111 der Aufbaukammer 42 zugeführt und über die Auslassöffnung 113 und Abführleitung 114 aus der Aufbaukammer 42 abgeführt werden. Bereits zu diesem Zeitpunkt als auch noch während des Aufbaus des Formkörpers 52 kann eine Kühlung der Aufbaukammer 42 gegeben sein.

Die Kühlposition 121 des Trägers 43 ist derart vorgesehen, dass Kühlkanäle 101 der Bauplattform 49 mit der zumindest einen Einlassöffnung 112 und zumindest einen Auslassöffnung 113 in der Umfangswand 83 der Aufbaukammer 42 fluchten. Der Volumenstrom durchströmt die Kühlkanäle 101, wodurch zumindest eine Kühlung der Bauplattform 49 gegeben ist. Die Kühlung kann durch einen gepulsten Saugstrom erfolgen. Durch die Länge der Pulsdauer, sowie deren Unterbrechung, kann die Abkühlrate in dem Formkörper 52 bestimmt werden. Bevorzugt ist eine gleichmäßige Kühlung über eine vorbestimmte Zeitdauer vorgesehen, damit der Aufbau von Eigenspannungen im Formkörper 52 gering gehalten wird. Die Kühlung kann auch durch einen Volumenstrom vorgesehen sein, der in seiner Durchflussmenge kontinuierlich zunimmt oder abnimmt. Ebenso kann ein Wechsel zwischen Zu- und Abnahme vorgesehen sein, um die gewünschte Abkühlrate zu erzielen. Durch den in der Heizplatte 136 vorgesehenen Temperaturfühler kann die Abkühlrate erfasst werden. Gleichzeitig kann über diesen Temperaturfühler die noch verbleibende Temperatur des Formkörpers 52 abgeleitet werden. Diese Kühlposition 121 wird solange eingehalten, bis der Formkörper 52 auf eine Temperatur von beispielsweise weniger als 50 °C abgekühlt ist. Gleichzeitig kann in dieser Kühlposition 121 die Bodenplatte 44 weiterhin gekühlt werden. Zusätzlich kann ebenso vorgesehen sein, dass an die Umfangswand 83 der Aufbaukammer 42 angrenzend oder in der Umfangswand 83 der Aufbaukammer 42 Kühlkanäle oder Kühlschläuche vorgesehen sind, welche ebenfalls dazu beitragen, dass eine Kühlung der Aufbaukammer 42, des Formkörpers 52 und des Trägers 43 ermöglicht ist.

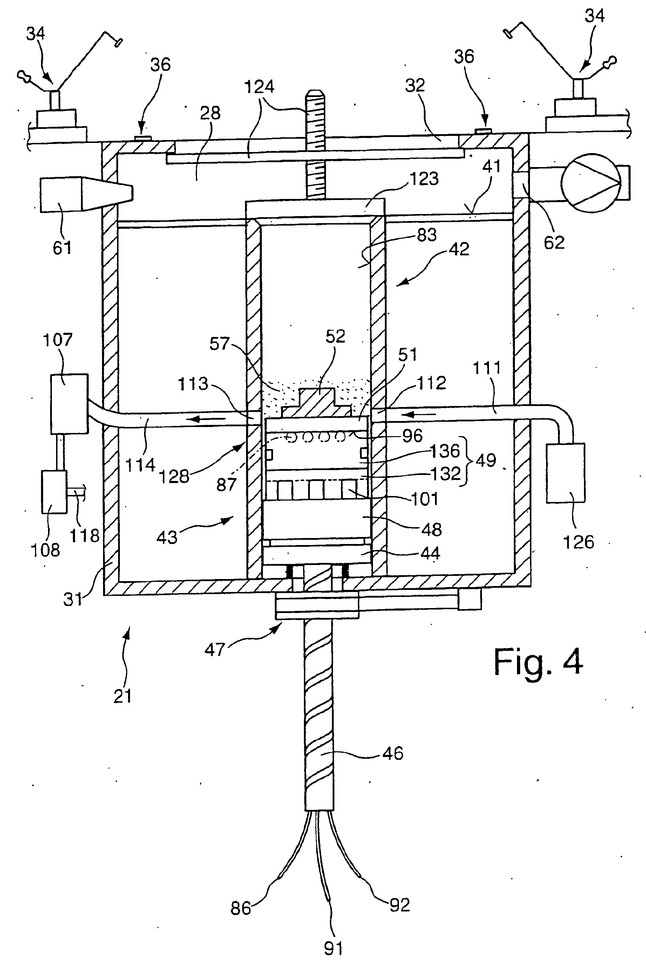

Nach dem Kühlen des Formkörpers 52 auf die gewünschte oder voreingestellte Temperatur, wird der Träger 43 in eine weitere Position oder Absaugposition 128 überführt, welche in Figur 4 dargestellt ist. Diese beispielhaft dargestellte Absaugposition 128 dient zum Entfernen, insbesondere zur Absaugung, des Aufbaumaterials 57, welches beim Herstellen des Formkörpers 52 nicht verfestigt wurde. Vor dem Anlegen eines Saugstromes, der die Aufbaukammer 42 durchströmt, wird die Aufbaukammer 42 durch ein Verschlusselement 123 geschlossen. Dieses Verschlusselement 123 weist Befestigungselemente 124 auf, welche an oder in der Öffnung 32 angreifen, um das Verschlusselement 123 dicht zur Aufbaukammer 42 festzulegen. Das Verschlusselement 123 ist bevorzugt transparent ausgebildet, so dass das Absaugen von nicht verfestigtem Aufbaumaterial 57 überwacht werden kann. Durch einen die Aufbaukammer 42 durchströmenden Saugstrom wird eine Verwirbelung in der Aufbaukammer 42 erzeugt, wodurch das nicht verfestigte Aufbaumaterial 57 abgesaugt und der Abscheidevorrichtung 107 und dem Filter 108 zugeführt wird. Gleichzeitig erfolgt durch die Absaugung weiterhin eine Kühlung der Aufbaukammer 42, des Formkörpers 52 und der Bauplattform 49. Zusätzlich kann über zumindest eine Düse in dem Verschlusselement 123 eine weitere Luftzufuhr ermöglicht sein.

Die Absaugung des Aufbaumaterials 57 kann durch einen konstanten Volumenstrom, einen gepulsten Volumenstrom oder einen Volumenstrom mit einem zunehmenden oder abnehmenden Massendurchsatz betrieben werden. Nach einer vorgegebenen Zeitdauer der Absaugung oder einer durch das Bedienpersonal einstellbaren Zeitdauer wird die Absaugung beendet.

Zur Entnahme des Formkörpers 52 wird das Verschlusselement 123 von der Aufbaukammer 42 abgenommen und der Träger 43 fährt in eine obere Position, so dass der Formkörper 52 zumindest teilweise oberhalb der Bodenfläche 41 der Prozesskammer 21 zur Entnahme positioniert wird.

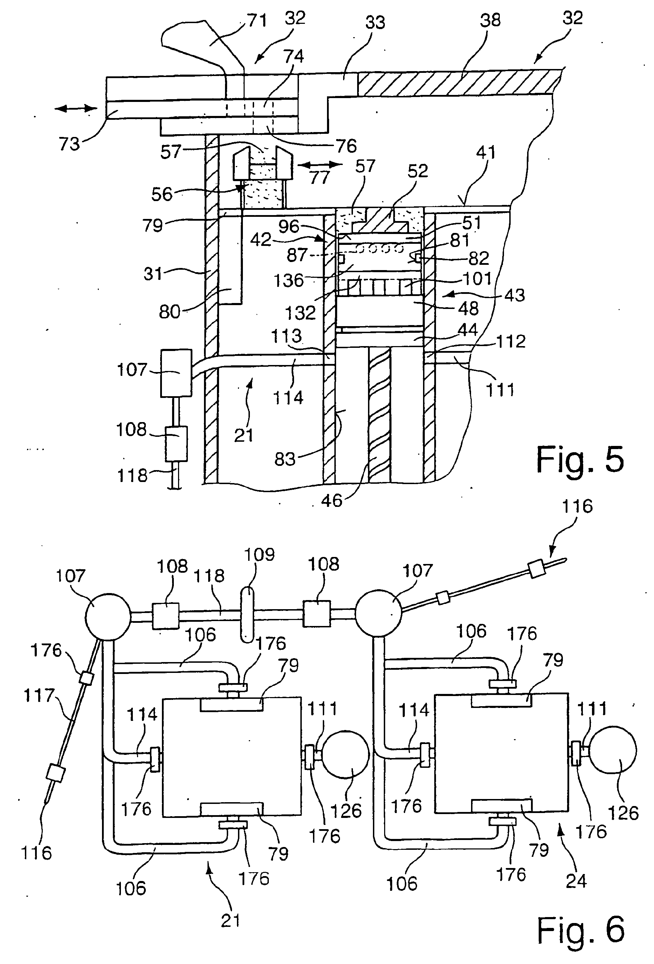

In Figur 5 ist ein Ausführungsbeispiel für die Zuführung des Aufbaumaterials 57 über eine Zuführeinrichtung 72 in die Prozesskammer 21 dargestellt. Der Teilschnitt zeigt einen Zuführkanal 71, der mit einem nicht näher dargestellten Sammelbehälter oder Vorratsbehälter in Verbindung steht und Aufbaumaterial 57 bereitstellt. Die Zuführeinrichtung 72 umfasst einen Schieber 73, welcher vorzugsweise eine schlitzförmige Öffnung 74 aufweist, die in einer ersten Position ermöglicht, dass das Aufbaumaterial 57 in die Öffnung 74 gelangt. Nach Positionieren des Schiebers 73 in einer zweiten Position wird das in der Öffnung 74 gespeicherte Aufbaumaterial 57 über einen Spalt 76 in die Auftrag- und Nivelliereinrichtung 56 befördert, welche im Anschluss daran durch eine Hin- und Herbewegung gemäß Pfeil 77 das Aufbaumaterial 57 in die Aufbaukammer 42 überführt. An den Umkehrpunkten für die Hin- und Herbewegung der Auftrag- und Nivelliereinrichtung 56 sind in der Bodenfläche 41 Aussparungen 79 vorgesehen, durch welche überschüssiges Aufbaumaterial 57 in eine Aufnahme oder Pulverfalle 80 abgeführt werden kann. Somit ist nach dem Einbringen des Aufbaumaterials 57 in die Aufbaukammer 42 die Bodenfläche 41 im wesentlichen frei von Aufbaumaterial 57. Durch diese Ausgestaltung der Zuführeinrichtung 72 ist eine portionierte Zuführung von Aufbaumaterial 57 in die Prozesskammer 28 ermöglicht. Des weiteren ist durch diese Zuführeinrichtung 72 ermöglicht, dass ein einfacher und schneller Wechsel von einem Aufbaumaterial 57 zu einem weiteren Aufbaumaterial 57 gegeben ist, da diese Zuführeinrichtung 72 eine nahezu rückstandsfreie Einbringung des Aufbaumaterials 57 in die Prozesskammer 21 ermöglicht. Weitere Lösungen zur Ausgestaltung der Zuführeinrichtung 72 sind ebenfalls möglich. Beispielsweise kann die portionierte Zuführung des Aufbaumaterials 57 auch über ein steuerbares Verschlusselement und ein Sensorelement erfolgen, mit dem die Zuführmenge bestimmt wird. Ebenso ist es möglich, anstelle der beschriebenen Auftrag- und Nivelliereinrichtung 56 eine Einrichtung zu verwenden, die das Aufbaumaterial 57 nach Art eines Bedruckungsverfahrens in die Aufbaukammer 42 aufbringt.

Das Doppelkammer- oder Mehrkammerprinzip wird nachfolgend anhand der Figur 6 beschrieben, welche eine schematische Draufsicht auf die erfindungsgemäße Vorrichtung 11 zeigt, wobei gleichzeitig auch auf die vorangegangenen Figuren Bezug genommen wird.

Jede Prozesskammer 21, 24 umfasst ein Filter 126, durch das gereinigte Umgebungsluft über eine Zuführleitung 111 einer Aufbaukammer 42 zugeführt wird. Aus der Aufbaukammer 42 führt eine Abführleitung 114 den Volumenstrom ab, der außerhalb des Gehäuses 31 einer Abscheidevorrichtung 107 zugeführt wird. Dieser ist ein Filter 108 nachgeschaltet. Des Weiteren umfasst die Prozesskammer 21, 24 jeweils eine Leitung 106, welche das in einer Pulverfalle 80 aufgefangene Aufbaumaterial 57 aus dem Gehäuse 31 abführt und der Abscheidevorrichtung 107 bzw. der Abführleitung 114 zuführt. Diese Leitung 106 steht mit einer Auslassöffnung der Pulverfalle 80 in dem Gehäuse 31 in Verbindung, durch welche nicht benötigtes Aufbaumaterial 57 aufgenommen wird.

Jeder Prozesskammer 21, 24 sind als Sperrventile ausgebildete Sperreinrichtungen 176 zugeordnet. Diese Sperreinrichtungen 176 sind in einer bevorzugten Ausführungsform in der Auslassöffnung 113 der Abführleitung 114 sowie in den Auslassöffnungen der Pulverfallen 80 vorgesehen, in welche die Leitungen zur Pulverabfuhr münden. Des Weiteren können diese Sperreinrichtungen 176 zwischen der Prozesskammer 21, 24 in einem Leitungsabschnitt der Abführleitung 114 und der Leitung 106 vor einer Abscheidevorrichtung 107 vorgesehen sein. Des Weiteren ist vorteilhafterweise vorgesehen, dass in einer Absaugleitung 117 einer Düse 116 zur Handabsaugung von nicht verfestigtem Aufbaumaterial 57 oder der Düse 116 zugeordnet ebenfalls eine Sperreinrichtung 176 vorgesehen ist. Zusätzlich können zur Erhöhung der Sicherheit weitere Sperreinrichtungen 176 vorgesehen sein. Beispielsweise kann eine Sperreinrichtung 176 in der Einlassöffnung 112 der Zuführleitung 111 vorgesehen sein. Des Weiteren kann zusätzlich eine Sperreinrichtung 176 in den jeweils von der Prozesskammer 21, 24 in das Gebläse 109 mündenden Verbindungsleitungen 118 vorgesehen sein, um weitere Sicherheitsfunktionen auszubilden.

Die Sperreinrichtungen 176 sind einzeln oder in Funktionsgruppen zusammengefasst ansteuerbar, so dass die Ansteuerung in die einzelnen Arbeitsprozesse, wie Herstellen des Formkörpers, Abkühlen des Trägers und Absaugen des nicht verfestigten Aufbaumaterials 57, eingebunden sind. Dadurch wird sichergestellt, dass beispielsweise beim Absaugen von nicht verfestigtem Aufbaumaterial 57 oder Abkühlen des Trägers 43 in der Prozesskammer 21 durch Schließen der Sperreinrichtungen 176 der Prozesskammer 24 eine hermetische Abriegelung der Prozesskammer 24 zur Prozesskammer 21 gegeben ist. Bevorzugt werden als Sperreinrichtung 176 Quetschventile eingesetzt, die eine hohe Standfestigkeit aufweisen.

Die Ansteuerung der Sperreinrichtungen 176 erfolgt bevorzugt in Abhängigkeit der Position des Trägers 43 in der Aufbaukammer 42. Des Weiteren kann auch vorgesehen sein, dass das Signal zur Ansteuerung der Sperreinrichtungen 176 mit dem Steuersignal zum Betrieb des Gebläses 109 gekoppelt ist. Vorzugsweise ist vorgesehen, dass alle Sperreinrichtungen 176 im Ruhezustand geschlossen sind und dass während des Absaugens beziehungsweise des Kühlens in einer Prozesskammer 21, 24 nur die dafür erforderlichen Sperreinrichtungen 176 geöffnet werden.

In die Abscheidevorrichtung 107 mündet des Weiteren eine Absaugleitung 117, welche eine Düse 116 zur manuellen Reinigung der Prozesskammer 21, 24 sowie des weiteren Umfeldes der Prozesskammer 21, 24 ermöglicht.

An der Düse 116 beziehungsweise an einem Rahmen zur Aufnahme der Düse 116 ist ein Sensorelement vorgesehen, welches beim Herausnehmen der Düse 116 aus der Halterung zur Handabsaugung automatisch das Gebläse 109 zuschaltet und die zugehörige Sperreinrichtung 176 öffnet, so dass die Düse 116 betriebsbereit ist. Die weiteren Sperreinrichtungen 176 bleiben hierbei geschlossen.

Die zumindest zwei Prozesskammern 21, 24 weisen des Weiteren vorzugsweise jeweils ein getrenntes Kühlsystem 103 (Figur 1) auf, welches Komponenten in und an dem Gehäuse 31 kühlt.

Die aus der Aufbaukammer 42 abgeführte Luft/Gas und das abgeführte Aufbaumaterial 57 werden somit jeweils einer jeder Prozesskammer 21, 24 zugeordneten Abscheidevorrichtung 107 und einem dieser nachgeschalteten Filter 108 zugeführt. Die Abscheidevorrichtung 107 umfasst einen Auffangbehälter, in welchem das abgeführte Aufbaumaterial 57 gesammelt wird. Dieses gesammelte Aufbaumaterial 57 kann durch ein Sieb zwischen der Abscheidevorrichtung 108 und dem Auffangbehälter gereinigt werden oder einer externen Aufbereitungsanlage zugeführt werden, um im Anschluss über die Zuführeinrichtung 72 für den weiteren schichtweisen Aufbau eines Formkörpers 52 verwendet zu werden. Durch die getrennte Absaugung, welche für jede Prozesskammer 21, 24 vorgesehen ist, können unterschiedliche Aufbaumaterialien eingesetzt werden, wobei eine Vermischung oder eine Verunreinigung des Aufbaumaterials 52 unterbunden ist. Insbesondere durch die Sperreinrichtungen 176 werden Beeinflussungen oder Vermischungen innerhalb der jeweiligen Kreisläufe, welche für jede Prozesskammer 21, 24 ausgebildet sind, verhindert.

Die erfindungsgemäße Vorrichtung weist des Weiteren vorteilhafterweise eine Löschanlage auf, welche für jede Prozesskammer 21, 24 vorgesehen und in die jeweilige Absaugung zumindest teilweise integriert ist. In der Absaugung ist ein thermisches Überwachungselement vorgesehen, welches die Temperatur in der Absaugung überwacht. Sobald ein auf das Aufbaumaterial 57 anpassbarer und einstellbarer Grenzwert überschritten wird, gibt dieses Überwachungselement ein Notstoppsignal an die Steuer- und Recheneinheit 26 aus. Daraufhin wird das Gebläse 109 stillgesetzt. Gleichzeitig werden die Leitungen 106, 114, 117, 118 ebenso wie der Filter 108 und die Abscheidevorrichtung 107 mit Schutz- oder Inertgas befüllt und die Sperreinrichtungen 176 geschlossen. Durch diese Maßnahme wird erreicht, dass der für eine mögliche Verbrennung erforderliche Sauerstoff durch das Schutzgas verdrängt wird. Diese Löschanlage weist den Vorteil auf, dass nach einem Reinigungsprozess sämtliche Bauteilkomponenten für die weitere Herstellung von Formkörpern 52 verwendet werden können.

Zumindest zwei Prozesskammern 21, 24 werden gemeinsam durch ein Gebläse 109 betrieben. Dieses Gebläse 109 ist bevorzugt als Radialgebläse ausgebildet und steht über Verbindungsleitungen 118 mit den jeweiligen Abscheidevorrichtungen 107 und Filtern 108 der Prozesskammern 21, 24 in Verbindung. Durch diese vorteilhafte Anordnung und Ausgestaltung der Prozesskammern 21, 24 sowie deren Zuordnung von Bauteilkomponenten und der Einbindung von Sperreinrichtungen 176 kann erzielt werden, dass jede Prozesskammer 21, 24 autark ausgebildet und hermetisch abgeriegelt ist. Ebenso ist eine gemeinsame Strahlquelle 16 und eine gemeinsame Strahlablenkeinrichtung 18 vorgesehen. Die weiteren Komponenten sind entsprechend der Anzahl der Prozesskammern 21, 24 vorgesehen, wodurch ermöglicht wird, dass geschlossene Materialkreisläufe sowohl für das Aufbaumaterial 57 als auch das Schutz- oder Inertgas gegeben sind.

Während des Aufbaus und der Herstellung eines Formkörpers 52 in einer Prozesskammer 21 können in der zumindest einen weiteren Prozesskammer 24 Umrüstarbeiten oder die Absaugung von nicht verfestigtem Aufbaumaterial 57 und/oder die Kühlung des Formkörpers 52 durchgeführt werden, ohne dass die benachbarte oder die benachbarten Prozesskammern beeinflusst werden. Dadurch kann eine optimale Auslastung der Strahlquelle 16 gegeben sein. Zusätzlich können in jeder Prozesskammer 21, 24 unterschiedliche Formkörper 52 mit unterschiedlichen Aufbaumaterialien 57 und Herstellungsparametern aufgebaut werden.

Das vorgenannte Prinzip ist nicht auf Doppelkammersysteme beschränkt. Vielmehr können auch drei oder mehrere Prozesskammern 21, 24 einander zugeordnet werden. Eine Strahlablenkeinrichtung 18 kann jeweils zur Prozesskammer 21, 24 positioniert werden, um einen abgelenkten Strahl auf die gewünschte Stelle innerhalb der Arbeitsebene zu führen. Alternativ kann ebenso vorgesehen sein, dass die Strahlquelle 16 und Strahlablenkeinrichtung 18 feststehend ausgebildet sind und die Prozesskammern 21, 24 relativ zur Strahlablenkeinrichtung 18 bewegt werden. Beispielsweise ist eine Karussellanordnung denkbar. Bei dieser Ausgestaltung kann ebenso vorgesehen sein, dass sowohl die Strahlablenkeinrichtung 18 und/oder die Strahlquelle 16 als auch die Prozesskammern 21, 24 relativ zueinander verfahrbar angeordnet sind.

## Patentansprüche

1. Vorrichtung zur Herstellung eines dreidimensionalen Formkörpers durch aufeinanderfolgendes Verfestigen von Schichten eines pulverförmigen, mittels elektromagnetischer Strahlung oder Teilchenstrahlung verfestigbaren Aufbaumaterials (57) an dem jeweiligen Querschnitt des Formkörpers (52) entsprechenden Stellen, mit einer Strahlquelle (16) zur Erzeugung eines Strahls und einer Strahlablenkeinrichtung (18) zum Ablenken des Strahls auf die zu verfestigende Schicht, mit einem Träger (43) in einer in einer Prozesskammer (21) angeordneten Aufbaukammer (42) zur Aufnahme des zu bildenden Formkörpers (52), **dadurch gekennzeichnet,**
- **dass** wenigstens zwei Prozesskammern (21, 24) vorgesehen sind,
- **dass** jede Prozesskammer (21, 24) hermetisch abgeriegelt und jeweils getrennt zur benachbarten Prozesskammer (24, 21) ausgebildet ist und
- **dass** die Strahlablenkeinrichtung (18) und die wenigstens zwei Prozesskammern (21, 24) zueinander in einer Bearbeitungsposition positionierbar sind.

2. Vorrichtung nach Anspruch 1, **dadurch gekennzeichnet, dass** jede Prozesskammer (21, 24) eine Absaugung für nicht verfestigtes Aufbaumaterial (57) aufweist, welche zumindest eine Sperreinrichtung (176) umfasst.

3. Vorrichtung nach Anspruch 1 oder 2, **dadurch gekennzeichnet, dass** ein Gebläse (109) für die wenigstens zwei Prozesskammern (21, 24) vorgesehen ist und wenigstens eine Sperreinrichtung (176) zwischen dem Gebläse (109) und jeder Prozesskammer (21, 24) in der Absaugung vorgesehen ist.

4. Vorrichtung nach einem der vorgehenden Ansprüche, **dadurch gekennzeichnet, dass** die Prozesskammer (21, 24) wenigstens eine Einlassöffnung aufweist, welche durch eine Sperreinrichtung (176) verschließbar ist.

5. Vorrichtung nach einem der Ansprüche 2 bis 4, **dadurch gekennzeichnet, dass** die Sperreinrichtung (176) in wenigstens einer mit einer Aufbaukammer (42), mit einer Pulverfalle (80) und vorzugsweise mit einer Düse (116) zur Handabsaugung in Verbindung stehenden Auslassöffnung vorgesehen ist.

6. Vorrichtung nach einem der Ansprüche 2 bis 5, **dadurch gekennzeichnet, dass** jede Sperrvorrichtung (176) durch eine Steuer- und Recheneinheit (26) getrennt oder als Gruppe für jede Prozesskammer (21, 24) gemeinsam ansteuerbar ist.

7. Vorrichtung nach einem der Ansprüche 2 bis 6, **dadurch gekennzeichnet, dass** die Sperreinrichtung (176) als Quetschventil ausgebildet ist und vorzugsweise pneumatisch, elektrisch, elektromagnetisch oder hydraulisch betätigbar ist.

8. Vorrichtung nach einem der vorhergehenden Ansprüche, **dadurch gekennzeichnet, dass** die Prozesskammer (21, 24) hermetisch abgeschlossen ist und durch eine zur Strahlablenkeinrichtung (18) weisende verschließbare Öffnung (32) zugänglich ist, die einen für die elektromagnetische Strahlung durchlässigen Bereich (37) aufweist.

9. Vorrichtung nach einem der vorhergehenden Ansprüche, **dadurch gekennzeichnet, dass** die Zuführeinrichtung (72) zumindest nach dem Zuführen von pulverförmigem Aufbaumaterial (57) zumindest in einer die Prozesskammer (21, 24) abschließenden Position angeordnet ist.

10. Vorrichtung nach einem der vorhergehenden Ansprüche, **dadurch gekennzeichnet, dass** die Prozesskammer (21, 24) wenigstens eine in die Prozesskammer (21, 24) führende Einlassdüse (61) und wenigstens eine davon abführende Absaugdüse (62), vorzugsweise für Schutz- oder Inertgas, aufweist.

11. Vorrichtung nach einem der vorhergehenden Ansprüche, **dadurch gekennzeichnet, dass** zwischen dem Träger (43) und einer den Träger (43) umgebenden Umfangswand (83) der Aufbaukammer (42) zumindest eine Dichtung (82, 94, 97) vorgesehen ist.

12. Vorrichtung nach Anspruch 11, **dadurch gekennzeichnet, dass** die Dichtung (82) aus einem Graphitwerkstoff ausgebildet ist.

13. Vorrichtung nach Anspruch 11, **dadurch gekennzeichnet, dass** die zum Träger (43) weisende Umfangswand (83) der Aufbaukammer (42) und zumindest die in dem Träger (43) angeordnete Dichtung (82) oder eine zur Aufbaukammer (42) weisende Umfangsfläche des Trägers (43) eine Werkstoffpaarung aufweist, durch welche ein Verschleiß an der Dichtung (82) oder der Umfangsfläche des Trägers (43) gegeben ist.

14. Vorrichtung nach einem der Ansprüche 11 oder 13, **dadurch gekennzeichnet, dass** die Oberflächenhärte der Umfangswand (83) der Aufbaukammer (42) größer als die des Aufbaumaterials (57) ausgebildet ist.

15. Vorrichtung nach Anspruch 11, **dadurch gekennzeichnet, dass** die Bauplattform (49) an eine Stirnfläche (96) angrenzend oder nahe an der Stirnfläche (96) ein Abstreiferelement (97) als Dichtung aufweist, welches an der Umfangswand (83) der Aufbaukammer (42) anliegt.

16. Vorrichtung nach Anspruch 15, **dadurch gekennzeichnet, dass** das Abstreiferelement (97) als Filzring ausgebildet ist.

17. Vorrichtung nach einem der vorhergehenden Ansprüche, **dadurch gekennzeichnet, dass** die der Prozesskammer (21, 24) zugeordnete Absaugung für nicht verfestigtes Aufbaumaterial (57) zumindest eine Abscheidevorrichtung (107) und ein Filter (108) umfasst.

18. Vorrichtung nach einem der vorhergehenden Ansprüche, **dadurch gekennzeichnet, dass** ein Gebläse (109) für die wenigstens zwei Prozesskammern (21, 24) vorgesehen ist, welches jeweils einer zur Prozesskammer (21; 24) zugehörigen Abscheidevorrichtung (107) und Filter (108) nachgeschaltet ist.

19. Vorrichtung nach einem der vorhergehenden Ansprüche, **dadurch gekennzeichnet, dass** jede Prozesskammer (21, 24) eine separate Bevorratung und Zuführeinrichtung (72) für das Aufbaumaterial (57) umfasst.

20. Vorrichtung nach einem der vorhergehenden Ansprüche, **dadurch gekennzeichnet, dass** eine Strahlablenkeinrichtung (18) zwischen den wenigstens zwei Prozesskammern (21, 24) verfahrbar angeordnet ist.

21. Vorrichtung nach einem der Ansprüche 1 bis 20, **dadurch gekennzeichnet, dass** die wenigstens zwei Prozesskammern (21, 24) zur Strahlablenkvorrichtung (18) verfahrbar sind.

22. Verfahren zur Herstellung eines dreidimensionalen Formkörpers, insbesondere mit einer Vorrichtung nach einem oder mehreren der vorhergehenden Ansprüche, **dadurch gekennzeichnet, dass** in einer ersten Prozesskammer (21) ein schichtweiser Aufbau durch aufeinanderfolgende Verfestigungen von Schichten eines pulverförmigen, mittels elektromagnetischer Strahlung oder Teilchenstrahlung verfestigbarem Aufbaumaterial (57) zur Herstellung eines Formkörpers (52) durchgeführt wird und in wenigstens einer zweiten Prozesskammer (24) zumindest ein Abkühlen, ein Absaugen von nicht verfestigtem Aufbaumaterial (57), ein Entladen des fertigen Bauteils, eine Umrüstung oder Einrichtung für die Herstellung eines neuen Formkörpers (52) durchgeführt werden kann.

23. Verfahren nach Anspruch 22, **dadurch gekennzeichnet, dass** nach vollständiger Herstellung eines Formkörpers (52) in einer Prozesskammer (21, 24) die Strahlablenkeinrichtung (18) zur zumindest einen weiteren Prozesskammer (24, 21) verfahren wird, die zuvor für die Herstellung eines Formkörpers durch schichtweisen Aufbau umgerüstet oder eingerichtet wurde.

24. Verfahren nach Anspruch 22 oder 23, **dadurch gekennzeichnet, dass** jede Prozesskammer (21, 24) mit Schutz- oder Inertgas zumindest während des aufeinanderfolgenden Verfestigens von Schichten zur Herstellung eines Formkörpers (52) durchströmt wird.

25. Verfahren nach Anspruch 22, **dadurch gekennzeichnet, dass** zumindest während des Absaugens von nicht verfestigtem Aufbaumaterial (57) oder des Kühlens eines hergestellten Formkörpers (52) in einer Prozesskammer (21, 24) Sperreinrichtungen (176) der zumindest einen weiteren Prozesskammer (24, 21) in einer geschlossenen Position gehalten werden.

## Claims

1. Apparatus for producing a three-dimensional shaped body by successive consolidation of layers of a pulverulent build-up material (57), which is consolidated by means of electromagnetic radiation or particle radiation, at locations corresponding to the respective cross section of the shaped body (52), having a beam source (16) for generating a beam and a beam-deflection device (18) for deflecting the beam onto the layer which is to be consolidated, having a carrier (43) in a build-up chamber (42), arranged in a process chamber (21), for receiving the shaped body (52) which is to be formed, **characterized**
- **in that** at least two process chambers (21, 24) are provided,
- **in that** each process chamber (21, 24) is hermetically locked off and is in each case designed to be separate from the adjacent process chamber (24, 21), and
- **in that** the beam-deflection device (18) and the at least two process chambers (21, 24) are positioned in a processing position with respect to one another.

2. Apparatus according to claim 1, **characterized in that** each process chamber (21, 24) has an extraction means for build-up material (57) that has not been consolidated, which extraction means comprises at least one barrier device (176).

3. Apparatus according to claim 1 or 2, **characterized in that** a fan (109) is provided for the at least two process chambers (21, 24), and at least one barrier device (176) is provided in the extraction means between the fan (109) and each process chamber (21, 24).

4. Apparatus according to one of the preceding claims, **characterized in that** the process chamber (21, 24) has at least one inlet opening, which is closable by a barrier device (176).

5. Apparatus according to one of the claims 2 to 4, **characterized in that** the barrier device (176) is provided in at least one outlet opening, which is in communication with a build-up chamber (42), with a powder trap (80) and preferably with a nozzle (116) for manual extraction.

6. Apparatus according to one of the claims 2 to 5, **characterized in that** each barrier apparatus (176) is actuated separately or jointly as a group for each process chamber (21, 24) by means of a control and arithmetic unit (26).

7. Apparatus according to one of the claims 2 to 6, **characterized in that** the barrier device (176) is designed as a pinch valve and actuated pneumatically, electrically, electromagnetically or hydraulically.

8. Apparatus according to one of the preceding claims, **characterized in that** the process chamber (21, 24) is hermetically sealed and is accessible through a closable opening (32) which faces towards the beam-deflection device (18) and has a region (37) which transmits the electromagnetic radiation.

9. Apparatus according to one of the preceding claims, **characterized in that** a feed device (72), at least after the feeding of pulverulent build-up material (57), is arranged at least in a position which closes off the process chamber (21, 24).

10. Apparatus according to one of the preceding claims, **characterized in that** the process chamber (21, 24) has at least one inlet nozzle (61) leading into the process chamber (21, 24) and at least one extraction nozzle (62) which leads away from the process chamber (21, 24)preferably for shielding or inert gas.

11. Apparatus according to one of the preceding claims, **characterized in that** at least one seal (82, 94, 97) is provided between the carrier (43) and a peripheral wall (83), surrounding the carrier (43), of the build-up chamber (42).

12. Apparatus according to claim 11, **characterized in that** the seal (82) is formed from a graphite material.

13. Apparatus according to claim 11, **characterized in that** the peripheral wall (83), facing towards the carrier (43), of the build-up chamber (42) and at least the seal (82) arranged in the carrier (83) or a peripheral surface, facing towards the build-up chamber (42), of the carrier (43) includes a material pairing which produces wear at the seal (82) or the peripheral surface of the carrier (43).

14. Apparatus according to one of the claims 11 or 13, **characterized in that** the surface hardness of the peripheral wall (83) of the build-up chamber (42) is designed to be greater than that of the build-up material (57).

15. Apparatus according to claim 11, **characterized in that** the building platform (49), adjacent to an end face (96) or close to the end face (96), has a stripper element (97), which bears against the peripheral wall (83) of the build-up chamber (42), as seal.

16. Apparatus according to claim 15, **characterized in that** the stripper element (97) is designed as a felt ring.

17. Apparatus according to one of the preceding claims, **characterized in that** the extraction means, assigned to the process chamber (21, 24), for build-up material (57) that has not been consolidated comprises at least a separation device (107) and a filter (108).

18. Apparatus according to one of the preceding claims, **characterized in that** there is a fan (109) for the at least two process chambers (21, 24), which fan is in each case connected downstream of a separation device (107) and filter (108) belonging to the process chamber (21, 24).

19. Apparatus according to one of the preceding claims, **characterized in that** each process chamber (21, 24) comprises a separate store and feed device (72) for the build-up material (57).

20. Apparatus according to one of the preceding claims, **characterized in that** the beam-deflection device (18) is arranged displaceably between the at least two process chambers (21, 24).

21. Apparatus according to one of the claims 1 to 20, **characterized in that** the at least two process chambers (21, 24) are displaced with respect to the beam-deflection device (18).

22. Process for producing a three-dimensional shaped body, in particular using an apparatus according to one or more of the preceding claims, **characterized in that** in a first process chamber (21) a layered build-up is carried out by successive consolidations of layers of a pulverulent build-up material (57), which is consolidated by means of electromagnetic radiation or particle radiation, to produce a shaped body (52), and at least a cooling, an extraction of build-up material (57) that has not been consolidated, a removal of the finished component, a conversion or setting-up for the production of a new shaped body (52) is carried out in at least a second process chamber (24).

23. Process according to claim 22, **characterized in that**, after production of a shaped body (52) has been completed in a process chamber (21, 24), the beam-deflection device (18) is displaced to the at least one further process chamber (24, 21), which has previously been converted or set up for the production of a shaped body (52) by layered build-up.

24. Process according to claim 22 or 23, **characterized in that** shielding or inert gas flows through each process chamber (21, 24) at least during the successive consolidation of layers for the production of a shaped body (52).

25. Process according to claim 22, **characterized in that** barrier devices (176) of the at least one further process chamber (24, 21) are held in a closed position at least during the extraction of build-up material (57) that has not been consolidated or the cooling of a produced shaped body (52) in a process chamber (21, 24).

## Revendications

1. Dispositif de fabrication d'un corps moulé tridimensionnel par solidification successive de couches d'un matériau structurel (57) pulvérulent, solidifiable au moyen d'un rayonnement électromagnétique ou particulaire, à des emplacements correspondants à la section transversale respective du corps moulé (52), comprenant une source de rayonnement (16) pour la production d'un faisceau et un dispositif de déviation de faisceau (18) pour dévier le faisceau sur la couche à solidifier, comprenant un support (43) dans une chambre structurelle (42) disposée dans une chambre de traitement (21) pour recevoir le corps moulé à façonner (52), **caractérisé en ce que**
- au moins deux chambres de traitement (21, 24) sont prévues,
- chaque chambre de traitement (21, 24) est scellée hermétiquement et est réalisée à chaque fois séparément de la chambre de traitement adjacente (24, 21) et
- le dispositif de déviation de faisceau (18) et les au moins deux chambres de traitement (21, 24) peuvent être positionnés les uns par rapport aux autres dans une position de traitement.

2. Dispositif selon la revendication 1, **caractérisé en ce que** chaque chambre de traitement (21, 24) présente une aspiration pour du matériau structurel (57) non solidifié, qui comprend au moins un dispositif de blocage (176).

3. Dispositif selon la revendication 1 ou 2, **caractérisé en ce qu'**il est prévu une soufflante (109) pour les au moins deux chambres de traitement (21, 24) et au moins un dispositif de blocage (176) est prévu entre la soufflante (109) et chaque chambre de traitement (21, 24) dans l'aspiration.

4. Dispositif selon l'une quelconque des revendications précédentes, **caractérisé en ce que** la chambre de traitement (21, 24) présente au moins une ouverture d'entrée qui peut être fermée par un dispositif de blocage (176).

5. Dispositif selon l'une quelconque des revendications 2 à 4, **caractérisé en ce que** le dispositif de blocage (176) est prévu dans au moins une ouverture de sortie en liaison avec une chambre structurelle (42), avec un piège à poudre (80) et de préférence avec une buse (116) pour l'aspiration manuelle.

6. Dispositif selon l'une quelconque des revendications 2 à 5, **caractérisé en ce que** chaque dispositif de blocage (176) peut être commandé par une unité de commande ou de calcul (26) séparément ou en commun en groupe pour chaque chambre de traitement (21, 24).

7. Dispositif selon l'une quelconque des revendications 2 à 6, **caractérisé en ce que** le dispositif de blocage (176) est réalisé sous forme de soupape à pince et peut être activé de préférence pneumatiquement, électriquement, électromagnétiquement ou hydrauliquement.

8. Dispositif selon l'une quelconque des revendications précédentes, **caractérisé en ce que** la chambre de traitement (21, 24) est fermée hermétiquement et est accessible par une ouverture (32) pouvant être fermée, tournée vers le dispositif de déviation de faisceau (18), qui présente une région perméable (37) au rayonnement électromagnétique.

9. Dispositif selon l'une quelconque des revendications précédentes, **caractérisé en ce que** le dispositif d'alimentation (72) est disposée au moins après l'alimentation en matériau structurel pulvérulent (57) au moins dans une position fermant la chambre de traitement (21, 24).

10. Dispositif selon l'une quelconque des revendications précédentes, **caractérisé en ce que** la chambre de traitement (21, 24) présente au moins une buse d'entrée (61) conduisant dans la chambre de traitement (21, 24) et au moins une buse d'aspiration (62) en sortant, de préférence pour du gaz de protection ou du gaz inerte.

11. Dispositif selon l'une quelconque des revendications précédentes, **caractérisé en ce que** l'on prévoit entre le support (43) et une paroi périphérique (83) de la chambre structurelle (42) entourant le support (43) au moins un joint d'étanchéité (82, 94, 97).

12. Dispositif selon la revendication 11, **caractérisé en ce que** le joint d'étanchéité (82) est réalisé à partir d'un matériau à base de graphite.

13. Dispositif selon la revendication 11, **caractérisé en ce que** la paroi périphérique (83) de la chambre structurelle (42) tournée vers le support (43) et au moins le joint d'étanchéité (82) disposé dans le support (43) ou une surface périphérique du support (43) tournée vers la chambre structurelle (42) présente un appariement de matériau, qui permet d'obtenir une usure au niveau du joint d'étanchéité (82) ou de la surface périphérique du support (43).

14. Dispositif selon l'une quelconque des revendications 11 ou 13, **caractérisé en ce que** la dureté de surface de la paroi périphérique (83) de la chambre structurelle (42) est supérieure à celle du matériau structurel (57).

15. Dispositif selon la revendication 11, **caractérisé en ce que** la plate-forme de construction (49) présente, en position adjacente à une face frontale (96) ou à proximité de la face frontale (96), un élément de raclage (97) servant de joint d'étanchéité, qui s'applique contre la paroi périphérique (83) de la chambre structurelle (42).

16. Dispositif selon la revendication 15, **caractérisé en ce que** l'élément de raclage (97) est réalisé sous forme de bague en feutre.

17. Dispositif selon l'une quelconque des revendications précédentes, **caractérisé en ce que** l'aspiration associée à la chambre de traitement (21, 24), pour le matériau structurel (57) non solidifié, comprend au moins un dispositif de séparation (107) et un filtre (108).

18. Dispositif selon l'une quelconque des revendications précédentes, **caractérisé en ce qu'**il est prévu une soufflante (109) pour les au moins deux chambres de traitement (21, 24), laquelle est montée à chaque fois après un dispositif de séparation (107) associé à la chambre de traitement (21, 24) et le filtre (108).

19. Dispositif selon l'une quelconque des revendications précédentes, **caractérisé en ce que** chaque chambre de traitement (21, 24) comprend un réservoir séparé et un dispositif d'alimentation (72) pour le matériau structurel (57).

20. Dispositif selon l'une quelconque des revendications précédentes, **caractérisé en ce qu'**un dispositif de déviation de faisceau (18) est disposé de manière déplaçable entre les au moins deux chambres de traitement (21, 24).

21. Dispositif selon l'une quelconque des revendications 1 à 20, **caractérisé en ce que** les au moins deux chambres de traitement (21, 24) peuvent être déplacées par rapport au dispositif de déviation de faisceau (18).

22. Procédé de fabrication d'un corps moulé tridimensionnel, notamment comprenant un dispositif selon l'une quelconque ou plusieurs des revendications précédentes, **caractérisé en ce que** dans une première chambre de traitement (21), une structure en couches est réalisée par solidifications successives de couches d'un matériau structurel pulvérulent (57) pouvant être solidifié par rayonnement électromagnétique ou par rayonnement particulaire, pour la fabrication d'un corps moulé (52), et dans au moins une deuxième chambre de traitement (24), on peut effectuer un refroidissement, une aspiration de matériau structurel (57) non solidifié, une décharge du composant fini, une adaptation ou une disposition pour la fabrication d'un nouveau corps moulé (52).

23. Procédé selon la revendication 22, **caractérisé en ce qu'**après la fabrication complète d'un corps moulé (52) dans une chambre de traitement (21, 24), le dispositif de déviation de faisceau (18) est déplacé vers au moins une autre chambre de traitement (24, 21) qui avait préalablement été adaptée ou prévue pour la fabrication d'un corps moulé par structure en couche.

24. Procédé selon la revendication 22 ou 23, **caractérisé en ce que** chaque chambre de traitement (21, 24) est parcourue par du gaz de protection ou du gaz inerte au moins pendant la solidification successive de couches pour la fabrication d'un corps moulé (52).

25. Procédé selon la revendication 22, **caractérisé en ce qu'**au moins pendant l'aspiration de matériau structurel non solidifié (57) ou pendant le refroidissement d'un corps moulé fabriqué (52) dans une chambre de traitement (21, 24), des dispositifs de blocage (176) de l'au moins une chambre de traitement supplémentaire (24, 21) sont maintenus dans une position fermée.
